# EUROPEAN PATENT APPLICATION

(11) **EP 4 674 819 A1**
(43) Date of publication of application: **07.01.2026**
(21) Application number: 25173276.4
(22) Date of filing: 29.04.2025
(51) Int. Cl.: C02F 3/34, D06F 34/22, D06F 39/00, C02F 1/68, C02F 103/00

(54) **A LINT DISINTEGRATION DEVICE FOR ELIMINATING THE LINT GENERATED IN LAUNDRY WASHING AND/OR DRYING PROCESSES**

(30) Priority: 02.07.2024 TR 202408493
(71) Applicant: Arçelik Anonim Sirketi, 34445 Istanbul (TR)
(72) Inventor: ATILA, Meryem, 34445 ISTANBUL (TR); TARKUC, Simge, 34445 ISTANBUL (TR); KAYISDAG, Varol, 34445 ISTANBUL (TR); BAYSEC GEMCI, Sebnem, 34445 ISTANBUL (TR)

(57) **Abstract**

The present invention relates to a lint disintegration device (1) which prevents microplastic release into water resources and keeps water resources clean by breaking the molecular bonds of microplastic-based lint formed as a result of the laundry washing and/or drying processes carried out by the laundry washing and/or drying (W) machines in the receptacle (3) by an enzyme-like biological and/or chemical agent with a suitable structure and amount so as to be transformed into environmental wastes which do not pose a danger to the environment or which pose a lesser danger than microplastics.

## Description

The present invention relates to a lint disintegration device for eliminating of the lint generated during the washing and/or drying processes performed by the laundry washing and/or drying machines.

In the laundry washing machines, the lint breaking off from textiles during the washing process mix with the washing water and as a result of the discharge of this water, the said synthetic-based lint pollutes water resources as microplastics. Therefore, in order to prevent pollution of water resources, the use of various filters which provide the retention of the said lint is widely known in the state of the art. For example, some laundry washing machines comprise a lint filter which is integrated into the detergent dispenser. Although almost 95% of microplastics can be retained with the said filter, the remaining 5% reaches and pollutes water resources with the water discharged from the washing machine. Moreover, the lint filter in this example embodiment must be replaced with a new one by the user at certain intervals, which causes user dissatisfaction. In another example embodiment, an external lint filter is used outside the washing machine to filter microplastics. However, in none of the state of the art embodiments, the lint cannot be completely eliminated, and the lint which is not eliminated reaches water resources and causes pollution. Furthermore, in the state of the art embodiments, microplastics create domestic waste due to the manual cleaning of the lint or throwing the lint in the trash, and recycling the said lint causes additional costs, processing and energy consumption.

Moreover, in the laundry drying machines, the lint breaks off from textiles during the drying process and causes microplastic release. Although the use of lint filters which can filter almost 95% of the lint generated in the laundry drying machines is known in the state of the art, the remaining 5% reaches and pollutes water resources with the water discharged from the drying machine.

The state of the art European Patent Document No. EP3701079 discloses that the fibers generated during the washing process in the laundry washing machines are fed to different lines and separated by means of a water circulation system. The said fibers are separated by a sensor such as an optical sensor, opacity sensor or spectrometer. In the said system, the filters which provide the retention of fibers larger than 2 millimeters are used. The fibers which are retained by the filters are then transferred to a different area by the water circulation system and the fibers collected here are thrown out by the user at certain intervals.

Therefore, there is a need for a lint disintegration device which enables the elimination of all the lint particles generated as a result of the washing and/or drying process performed in the state of the art laundry washing and/or drying machines.

The aim of the present invention is the realization of a lint disintegration device which enables the elimination of all the lint particles generated as a result of the washing and/or drying process performed in the state of the art laundry washing and/or drying machines.

The lint disintegration device realized in order to attain the aim of the present invention, explicated in the first claim and the respective claims thereof, comprises a body; a receptacle which is defined in the body to keep the water-lint mixture therein; at least one opening which is arranged on the body so as to be connected to the receptacle and to enable the water and/or the lint-water mixture and/or the lint to be loaded into the receptacle; at least one chamber which is arranged in the body so as to store biological and/or chemical agents having a structure suitable for breaking the bonds of microplastic molecules in the lint structure; at least one control unit which is configured to detect the amount of biological and/or chemical agent suitable for the amount of lint in the receptacle to break the bonds of microplastic molecules and to enable this amount of biological and/or chemical agent to be supplied from the chamber to the receptacle; and at least one outlet which is arranged on the body so as to be in fluid communication with the receptacle and which enables the water cleaned from microplastic to be discharged out of the body. After a washing and/or drying process performed by the laundry washing and/or drying machine, the lint containing microplastic-based fibers which break off from the textiles are automatically and/or manually supplied into the receptacle from the said machines. Afterwards, the amount of lint in the receptacle is detected by the control unit and the amount of biological and/or chemical agent corresponding to break down the determined amount of lint is determined and the determined amount of biological and/or chemical agent is supplied from the chamber into the receptacle. As a result of the chemical and/or biochemical reaction which occurs between the microplastics and the biological and/or chemical agent supplied into the receptacle, the bond structures of the microplastic molecules are broken down and transformed into environmental wastes which do not pose a danger to the environment or which pose much less danger than microplastics, and as a result of the reaction, the water which does not harm the environment or which has a very low risk of harming the environment is discharged out of the body through the outlet. By means of the lint disintegration device of the present invention, the release of microplastics into nature due to the laundry washing and/or drying process is almost completely prevented and natural resources, especially natural water resources, are prevented from being polluted and becoming unusable.

In an embodiment of the present invention, at least one enzyme from the enzyme group containing cellulase, esterase, and lipase is used as a biological and/or chemical agent. By means of the cellulase effectively breaking the molecular bonds of cotton-based microplastic fibers while esterase and lipase effectively breaking the molecular bonds of polyester-based synthetic microplastic fibers, it is ensured that the said microplastics are, respectively, transformed into glucose monomers or shorter oligosaccharides and substances which are harmless or much less harmful to the environment such as terephthalic acid and ethylene glycol.

In an embodiment of the present invention, the lint disintegration device comprises at least two openings, that is, at least one first opening which is configured to connect a hose or pipe suitable for delivering the water or the water-lint mixture to the end thereof, and at least one second opening which is configured to enable the lint to be loaded directly into the receptacle by the user. In this embodiment, the end of the hose or pipe which is not connected to the first opening can be connected to the water mains or a separate water tank or a water storage tank in the laundry washing and/or drying machine or to the discharge line of the said machines. In particular, in case the relevant laundry washing and/or drying machine has a lint filter, the user manually fills the lint collected on the lint filter into the receptacle through the second opening after the laundry washing and/or drying process. The lint disintegration process can be started by obtaining a water-lint mixture in the receptacle with the water taken through the first opening.

In an embodiment of the present invention, the lint disintegration device comprises at least one first lid which can move between a first position covering the first opening and at least one second position providing access to the first opening. By bringing the said first lid to the first position after the lint is filled into the receptacle, access to the receptacle from the first opening is prevented and the risk of the lint in the receptacle adversely affecting the environment is eliminated until the lint disintegration process is completed.

In an embodiment of the present invention, the opening is configured such that a hose or pipe suitable for delivering the water-lint mixture is connected to the end thereof. In this embodiment, the end of the hose or pipe which is not connected to the opening is connected to the laundry washing and/or drying machine and the lint-water mixture generated as a result of the laundry washing and/or drying process is automatically supplied into the receptacle from the said laundry washing and/or drying machine. Thus, the need for the user manually supplying lint in the receptacle is eliminated, providing ease of use.

In an embodiment of the present invention, the lint disintegration device comprises at least one mixer which is arranged in the receptacle so as to mechanically mix the lint-water-biological and/or chemical agent mixture in the receptacle. In an embodiment of the present invention, the mixer has a mixer-like shape comprising a rod which performs a rotational movement around its axis by means of power supplied from a power source such as an electric motor, battery or mains, and a plurality of protrusion-like structures arranged around the end of the rod opposite to the end where the necessary drive is provided for the rotational movement thereof. In an embodiment of the present invention, the mixer is configured in the form of a magnetic mixer. In an embodiment of the present invention, the mixer is configured as a vibration generator which generates vibrations by means of a power source such as an electric motor, battery or mains and which enables the said vibrations to be transmitted into the receptacle. During the lint disintegration process, by mechanically mixing the components in the receptacle, the effect of the biological and/or chemical agent on the lint-water mixture is accelerated, thus ensuring that the chemical and/or biochemical reaction taking place in the receptacle occurs effectively and quickly.

In an embodiment of the present invention, the lint disintegration device comprises at least one first sensor which is configured to generate data enabling the detection of the amount of lint in the receptacle. The said first sensor may be a commonly used sensor such as an optical sensor or a turbidity sensor. The data generated by the first sensor is transmitted to the control unit, the control unit processes this data to detect the amount of lint in the receptacle and calculates the amount of biological and/or chemical agent appropriate for the detected amount of lint so as to ensure that the calculated amount of biological and/or chemical agent is supplied into the receptacle. Thus, the biological and/or chemical agent stored in the chamber is used economically and an effective lint disintegration process is performed.

In an embodiment of the present invention, the lint disintegration device comprises at least one second sensor which is configured to generate data regarding the inner temperatures of the receptacle and the chamber, and at least one air conditioner which is configured to heat or cool the inner environment of the chamber and the receptacle so as to keep the inner temperatures of the receptacle and the chamber at at least one predetermined target temperature value. The predetermined target temperature value for the chamber is preferably an optimal temperature value or range wherein the biological and/or chemical agent, which is stored in the chamber and which may structurally deteriorate depending on the temperature, can be stored for a long time without deteriorating. The predetermined target temperature value for the receptacle is an optimal temperature value or range which enables the chemical and/or biochemical reaction to take place in the receptacle in the most effective way. By appropriately heating and cooling the receptacle and the chamber by means of the air conditioner to bring them to the said target temperature values , it is ensured that the enzyme-like biological or chemical agents which are structurally sensitive to temperature are preserved in the chamber for a long time without their structures being deteriorated, and at the same time, the chemical and/or biochemical reactions are carried out in the receptacle at the most optimal temperature, thus improving the efficiency of the lint disintegration process.

In an embodiment of the present invention, the lint disintegration device comprises at least one third sensor which is configured to detect the water level in the receptacle. By taking water into the receptacle depending on the receptacle water level detected by the third sensor for the lint disintegration process, it is ensured that sufficient water is present in the receptacle for the lint disintegration process while the risk of taking excess water and the excess water overflowing from the receptacle is eliminated.

In an embodiment of the present invention, the lint disintegration device comprises at least one second lid which is configured to be able to move between at least one open position providing access into the chamber and a closed position preventing access to the chamber. When the biological and/or chemical agent stored in the chamber is depleted or falls below a certain level, the user can easily bring the second lid to the first position and fill the chamber with biological and/or chemical agent. Thus, the need for technical service or expertise to fill the chamber with biological and/or chemical agent is eliminated, increasing user satisfaction.

By means of the present invention, it is ensured that microplastic-based lint breaking off from the treated textiles as a result of the laundry washing and/or drying process enters into chemical or biochemical reactions with suitable biological and/or chemical agents such as esterase and lipase enzymes in the receptacle so as to ensure the breaking of the bonds of microplastic molecules to be transformed into environmental wastes which do not pose a danger to the environment or which pose less danger than microplastics, preventing the release of microplastics into water resources.

The lint disintegration device realized in order to attain the aim of the present invention is illustrated in the attached figures, where:

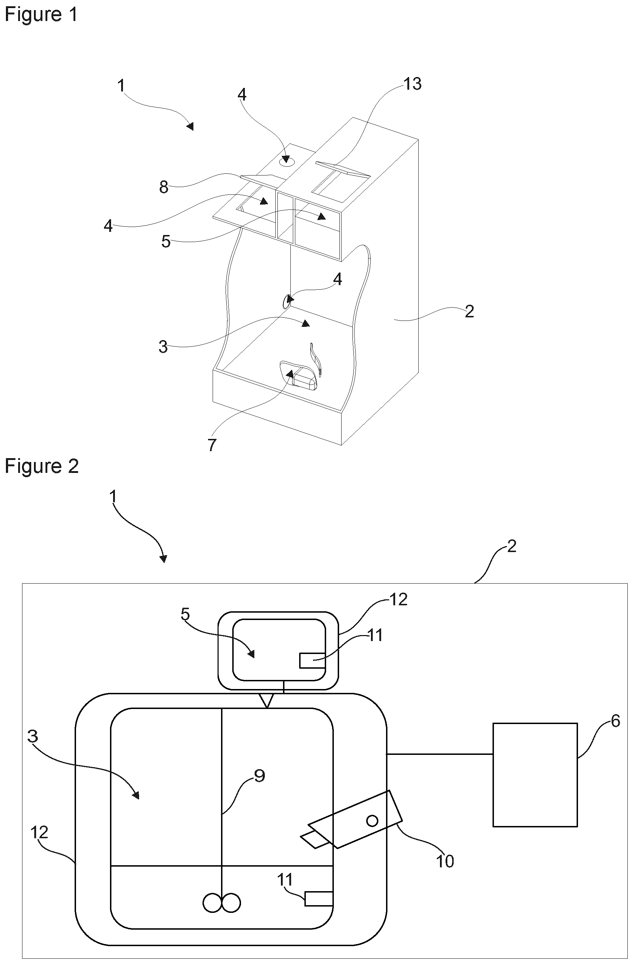

Figure 1 - is the partial perspective view of the lint disintegration device in an embodiment of the present invention.
Figure 2 - is the schematic view of the lint disintegration device in an embodiment of the present invention.

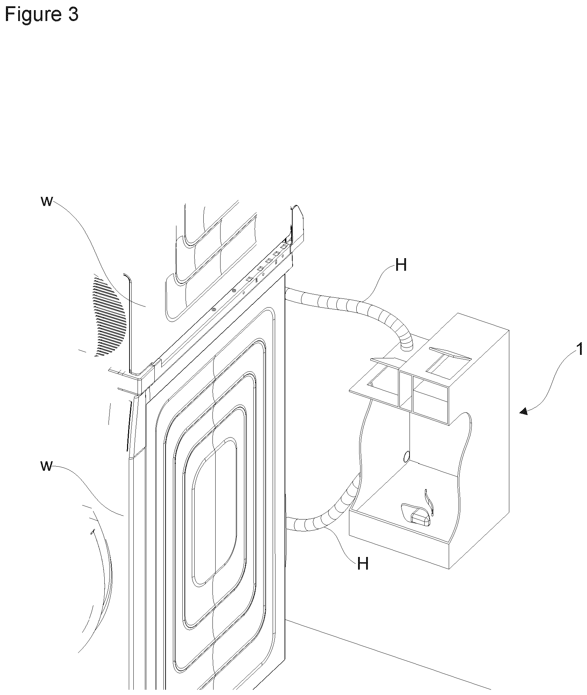

Figure 3 - is the partial perspective view of the lint disintegration device connected to the laundry washing and/or drying machine in an embodiment of the present invention.

The elements illustrated in the figures are numbered as follows:
1- Lint disintegration device
2- Body
3- Receptacle
4- Opening
5- Chamber
6- Control unit
7- Outlet
8- First lid
9- Mixer
10- First sensor
11- Second sensor
12- Air conditioner
13- Second lid

H. Hose or pipe
W. Laundry washing and/or drying machine

The lint disintegration device (1) of the present invention comprises a body (2); a receptacle (3) wherein the lint-water mixture is stored; at least one opening (4) which enables the lint and the water to be taken into the receptacle (3) separately or together as the lint-water mixture; a chamber (5) wherein the biological and/or chemical agents suitable for breaking the bonds of lint molecules and converting the lint into environmental waste are stored; a control unit (6) which is configured to detect the amount of biological and/or chemical agent sufficient to break down the amount of lint in the receptacle (3) and to direct the said amount of biological and/or chemical agent from the chamber (5) into the receptacle (3); and at least one outlet (7) which enables the water cleaned of the lint to be discharged out of the body (2). The lint-water mixture, which is mainly composed of microplastics and/or organic fibers and is formed by breaking off the textiles during the laundry washing and/or drying processes performed by the laundry washing and/or drying machines (W), is taken into the receptacle (3) through the opening (4). Afterwards, the biological and/or chemical agent in an amount suitable to break the bonds of the lint molecules in the said receptacle (3) is supplied into the receptacle (3) from the chamber (5) under the control of the control unit (6), and as a result of the chemical and/or biochemical reaction taking place in the receptacle (3), the bonds of the lint molecules are broken and the said microplastic-based lint is transformed into environmental waste. The water purified from the lint as a result of the reaction is discharged through the outlet (7). By means of the lint disintegration device (1) of the present invention, the molecular structures of microplastic-based lint which breaks off from textiles as a result of the laundry washing and/or drying process are broken as a result of chemical and/or biochemical reactions carried out by using biological and/or chemical agents so as to be converted into environmental waste and then discharged, thus preventing microplastics from being sent to water resources and polluting water resources.

In an embodiment of the present invention, in the lint disintegration device (1), cellulase and/or esterase and/or lipase enzymes are stored in the chamber (5) as biological and/or chemical agents. Cellulase enzymes play a key role in breaking down cellulose, the main component of cotton fibers in the pile structure, and the said enzymes hydrolyze the β-1,4-glycosidic bonds in cellulose molecules, thus enabling the cellulose polymer to break down into glucose monomers or shorter oligosaccharides. The application of cellulases can vary by targeting amorphous or crystalline regions of cellulose, which makes the said enzymes extremely effective in processing cotton-based materials. On the other hand, enzymes such as esterase and lipase are used for synthetic fibers such as polyester, which are also found in the lint. These enzymes effectively cleave the ester bonds found in polyethylene terephthalate (PET), the main component of polyester. The hydrolysis of the said ester bonds enables the polyester fibers to decompose into simpler, environmentally-friendly substances such as terephthalic acid and ethylene glycol, facilitating the biodegradation process. Enzymes such as endoglucanase, exoglucanase and beta-glucosidase can be used for cotton textiles, while cutinase, lipase, polyethylene terephthalate hydrolase (PETases) can be used for polyesters. In the case of bio-based acids and inorganic acids, acetic acid, citric acid, oxalic acid, phosphoric acid, boric acid and the like can be used. For mixed-structured textiles, in other words, for example, textiles containing both cotton and polyester, a combination of the said biological and/or chemical agents can be used. By using such substances as biological and/or chemical agents, the bonds of synthetic fibers such as cotton or polyester in the lint are effectively broken, and the said lint is transformed into harmless environmental waste.

In an embodiment of the present invention, the lint disintegration device (1) comprises at least two openings (4), that is, at least one first opening (4) which is configured to allow the connection of the end, which is not connected to a water source, of at least one hose or pipe (H) connected to the water source from one end, and at least one second opening (4) which is configured to enable the lint to be directly loaded into the receptacle (3). In this embodiment, the user manually puts the lint, which is collected in the lint filters provided in the laundry washing and/or drying machine (W), into the receptacle (3) through the second opening (4). The end of the hose or pipe (H) which enables the water to be delivered into the receptacle (3) and which is not connected to the first opening (4) can be connected to an external water tank and/or a water source of the laundry washing and/or drying machine (W). When the lint disintegration process is desired to be performed, the water is taken into the receptacle (3) through the first opening (4) and the lint-water mixture is formed in the receptacle (3). This embodiment is particularly suitable for use in laundry washing and/or drying machines (W) having a lint filter.

In an embodiment of the present invention, the lint disintegration device (1) comprises at least one first lid (8) which covers the first opening (4) configured to enable the lint to be loaded directly into the receptacle (3). When the user wants to manually load the lint into the receptacle (3), he/she brings the first lid (8) to the position where access to the receptacle (3) is permitted, loads the lint into the receptacle (3), and then brings the said first lint (8) to the position where access to the receptacle (3) is prevented. By means of the first lid (8), the lint stored in the receptacle (3) is prevented from getting into contact with the external environment, thus eliminating any adverse situation which may threaten health or disrupt the comfort of living.

In an embodiment of the present invention, the opening (4) is configured to allow the connection of the end, which is not connected to the laundry washing and/or drying machine (W), of at least one hose or pipe (H) which is connected to the laundry washing and/or drying machine (W) from one end and which carries the lint-water mixture formed as a result of the laundry washing and/or drying process performed by the laundry washing and/or drying machine (W). In this embodiment, the lint-water mixture formed as a result of the laundry washing and/or drying process performed by the laundry washing and/or drying machine (W) is automatically supplied into the receptacle (3) by the laundry washing and/or drying machine (W). Thus, the need for the user manually supplying lint in the receptacle (3) is eliminated, providing ease of use. Moreover, by means of this embodiment, the need for using an extra lint filter in the laundry washing and/or drying machines (W) is eliminated, providing economic advantages.

In an embodiment of the present invention, the lint disintegration device (1) comprises at least one mixer (9) which is configured to mechanically mix the lint-water mixture in the receptacle (3) and the biological and/or chemical agent. After the biological and/or chemical agent is taken into the receptacle (3), the lint disintegration process is started and the mixer (9) is preferably operated by the control unit (6) so as to accelerate the penetration of the biological and/or chemical agent into the lint-water mixture. This ensures that the chemical and/or biochemical reaction between the lint and the biological and/or chemical agent occurs effectively and rapidly.

In an embodiment of the present invention, the lint disintegration device (1) comprises at least one first sensor which is configured to detect the lint amount in the receptacle (3). In an embodiment of the present invention, the first sensor (10) is an optical sensor. In an embodiment of the present invention, the first sensor (10) is a turbidity sensor. The said first sensor (10) is in communication with the control unit (6) so as to perform data exchange, and before the lint disintegration process starts, the first sensor (10) is triggered by the control unit (6) and sends the data, which enables the amount of lint in the receptacle (3) to be determined, to the control unit (6). The control unit (6) processes the data received from the first sensor (10) to determine the amount of lint in the receptacle (3) and calculates the amount of biological and/or chemical agent required to break down the detected amount of lint. The control unit (6) enables the calculated amount of biological and/or chemical agent to be supplied from the chamber (5) into the receptacle (3) and starts the lint disintegration process. Thus, by using biological and/or chemical agent at an amount depending on the amount of lint in the receptacle (3), the biological and/or chemical agent stored in the chamber (5) is economically used and an effective lint disintegration process is performed.

In an embodiment of the present invention, the lint disintegration device (1) comprises at least one second sensor (11) which is configured to measure the temperature in the receptacle (3) and the chamber (5), and at least one air conditioner (12) which is connected to the receptacle (3) and the chamber (5) so as to perform the heating and cooling processes to keep the temperature in the receptacle (3) and the chamber (5) at a predetermined target temperature value. In an embodiment of the present invention, two second sensors (11) and two air conditioners (12) arranged separately for the receptacle (3) and the chamber (5) are used. In a derivative of this embodiment, one of the air conditioners (12) is configured to surround the receptacle (3) from the outside, while the other air conditioner (12) is configured to surround the chamber (5) from the outside. In this embodiment, the second sensor (11) is in communication with the control unit (6) so as to perform data exchange and transmits the data regarding the temperature of the interior of the receptacle (3) and the chamber (5) to the control unit (6). The control unit (6) determines the temperature of the receptacle (3) and the chamber (5) according to the data received from the second sensor (11) and compares this value with at least one target temperature value predetermined for the receptacle (3) and the chamber (5). If it is determined that the temperature value of the receptacle (3) and/or the chamber (5) is lower than the target temperature value as a result of the comparison, the control unit (6) is configured to operate the air conditioner (12) so as to heat the receptacle (3) and/or the chamber (5) to bring the temperature of the relevant receptacle (3) and/or the chamber (5) to the target temperature value. If it is determined that the temperature value of the receptacle (3) and/or the chamber (5) is higher than the target temperature value as a result of the comparison, the control unit (6) is configured to operate the air conditioner (12) so as to cool the receptacle (3) and/or the chamber (5) to bring the temperature of the relevant receptacle (3) and/or the chamber (5) to the target temperature value. Thus, while it is ensured that biological or chemical agents such as enzymes which are structurally sensitive to temperature are preserved for a long time in the chamber (5) without their structures deteriorating due to high temperatures, it is also ensured that the chemical and/or biochemical reactions are carried out in the receptacle (3) at the most optimal temperature, thus improving the efficiency of the lint disintegration process.

In an embodiment of the present invention, the lint disintegration device (1) comprises at least one third sensor (not shown in figures) which is configured to detect the water level in the receptacle (3). In this embodiment, the third sensor is in communication with the control unit (6) so as to perform data exchange and is configured to send a signal to the control unit (6) when the water level in the receptacle (3) reaches a predetermined certain value. The control unit (6) is configured to directly cut off the water intake into the receptacle (3) through the opening (4) and/or to provide the user with an audible and/or visual warning about the situation in line with the signal received from the third sensor. Thus, it is ensured that sufficient water is present in the receptacle (3) for the lint disintegration process while the risk of taking excess water and the excess water overflowing from the receptacle (3) is eliminated.

In an embodiment of the present invention, the lint disintegration device (1) comprises at least one second lid (13) which is configured to be able to move between at least one open position providing access into the chamber (5) and a closed position preventing access to the chamber (5). In this embodiment, when in the closed position, the second lid (13) prevents access to biological and/or chemical agents stored in the chamber (5), thus, for example, eliminating the possibility of children having access to these agents which may have an adverse effect on health. Moreover, when the biological and/or chemical agent stored in the chamber (5) is depleted or falls below a certain level, the user can easily bring the second lid (13) to the open position and fill the chamber (5) with biological and/or chemical agent. Thus, the need for technical service or expertise to fill the chamber (5) with biological and/or chemical agent is eliminated, increasing user satisfaction.

By means of the present invention, a lint disintegration device (1) is realized, which prevents microplastic release into water resources and keeps water resources clean by breaking the molecular bonds of microplastic-based lint formed as a result of the laundry washing and/or drying processes carried out by the laundry washing and/or drying (W) machines in the receptacle (3) by an enzyme-like biological and/or chemical agent with a suitable structure and amount so as to be transformed into environmental wastes which do not pose a danger to the environment or which pose a lesser danger than microplastics.

## Claims

1. A lint disintegration device (1) **characterized by** a body (2); a receptacle (3) wherein the lint-water mixture is stored; at least one opening (4) which enables the lint and the water to be taken into the receptacle (3) separately or together as the lint-water mixture; a chamber (5) wherein the biological and/or chemical agents suitable for breaking the bonds of lint molecules and converting the lint into environmental waste are stored; a control unit (6) which is configured to detect the amount of biological and/or chemical agent sufficient to break down the amount of lint in the receptacle (3) and to direct the said amount of biological and/or chemical agent from the chamber (5) into the receptacle (3); and at least one outlet (7) which enables the water cleaned of the lint to be discharged out of the body (2).

2. A lint disintegration device (1) as in Claim 1, **characterized by** the chamber (5) wherein cellulase and/or esterase and/or lipase enzymes are stored as biological and/or chemical agents.

3. A lint disintegration device (1) as in Claim 1 or 2, **characterized by** at least two openings (4), that is, at least one first opening (4) which is configured to allow the connection of the end, which is not connected to a water source, of at least one hose or pipe (H) connected to the water source from one end, and at least one second opening (4) which is configured to enable the lint to be directly loaded into the receptacle (3).

4. A lint disintegration device (1) as in Claim 3, **characterized by** at least one first lid (8) which covers the first opening (4) configured to enable the lint to be loaded directly into the receptacle (3).

5. A lint disintegration device (1) as in Claim 1 or 2, **characterized by** the opening (4) is configured to allow the connection of the end, which is not connected to the laundry washing and/or drying machine (W), of at least one hose or pipe (H) which is connected to the laundry washing and/or drying machine (W) from one end and which carries the lint-water mixture formed as a result of the laundry washing and/or drying process performed by the laundry washing and/or drying machine (W).

6. A lint disintegration device (1) as in any one of the above claims, **characterized by** at least one mixer (9) which is configured to mechanically mix the lint-water mixture in the receptacle (3) and the biological and/or chemical agent.

7. A lint disintegration device (1) as in any one of the above claims, **characterized by** at least one first sensor which is configured to detect the lint amount in the receptacle (3)

8. A lint disintegration device (1) as in any one of the above claims, **characterized by** at least one second sensor (11) which is configured to measure the temperature in the receptacle (3) and the chamber (5), and at least one air conditioner (12) which is connected to the receptacle (3) and the chamber (5) so as to perform the heating and cooling processes to keep the temperature in the receptacle (3) and the chamber (5) at a predetermined target temperature value.

9. A lint disintegration device (1) as in any one of the above claims, **characterized by** at least one third sensor which is configured to detect the water level in the receptacle (3).

10. A lint disintegration device (1) as in any one of the above claims, **characterized by** at least one second lid (13) which is configured to be able to move between at least one open position providing access into the chamber (5) and a closed position preventing access to the chamber (5).
